# EUROPEAN PATENT SPECIFICATION

(11) **EP 1 905 675 B1**
(45) Date of publication and mention of the grant of the patent: **20.05.2009**
(21) Application number: 06020466.6
(22) Date of filing: 28.09.2006
(51) Int. Cl.: B62D 61/04

(54) **Wheel arrangement for a four-wheeled vehicle**
Radanordnung eines vierradiges Fahrzeugs
Arrangement de roues d'un véhicule à quatre roues

(43) Date of publication of application: 02.04.2008
(73) Proprietor: INDUSTRIAL TECHNOLOGY RESEARCH INSTITUTE, Chutung, Hsinchu (TW)
(72) Inventor: Peng, Yu-Yin, Hsinchu City 300 Taiwan (TW)
(74) Representative: Negendanck, Matthias

(56) References cited:
- WO-A-20/05021360
- FR-A- 1 203 898
- GB-A- 841 871
- US-A- 1 262 806
- US-A- 3 166 141
- US-A- 6 019 682

## Description

### FIELD OF THE INVENTION

The present invention relates to a wheel arrangement for a four-wheeled vehicle, and more particularly, to a rhombus or diamond wheel arrangement capable of enabling a vehicle to perform a turn-in-spot without having additional mechanism to be installed thereon.

### BACKGROUND OF THE INVENTION

Traffic is the everlasting nightmare for every metropolitan driver, and it is no truer when trying to find a parking place in any major city. To encounter this problem, a vehicle with ability to turn in tight space had been proposed. As the advance of motor and its control technology, some advanced vehicles, especially the rectangle four-wheeled vehicles, are configured with four wheel steering mechanism which cooperates with a motor-driven steering switching mechanism to enable two front wheels of the vehicle to be toe-in and two rear wheels to be toe-out so as to enable the vehicle to turn about in tight space by the help of a corresponding power system. Such vehicles can have good maneuverability and steering that is easy to park and turn around. However, mechanisms, components and controls for enabling a rectangle four-wheeled vehicle to turn-in-spot in tight space are quite complicated, bulky and heavy, moreover, it has adverse affects on wheel and chassis alignment. Particularly, for those smaller size automobiles running in downtown area with quite small internal spaces and the weight thereof are preferred to be reduced for fuel efficiency, the aforesaid four wheel steering mechanism enabling turn-in-spot must be simplified. In addition, the operations of negotiating a turn and making a U-turn in tight space of the rectangle four-wheeled vehicle using the aforesaid four wheel steering are independent to each other, which makes the operations of the mechanism even more complicate.

A three-wheeled vehicle with one front wheel and two rear wheels is much simpler at system complexity than rectangle four-wheeled vehicle (only two wheels need mechanism control), but the three-wheeled vehicle must enable the two rear wheels to toe-out while steering the front wheel to turn at 90 degrees for enabling the three-wheeled vehicle to turn-in-spot in tight space. Furthermore, without two rear wheels to toe-out , since the forgoing turn is centering about the intersection of the rear wheel shaft and the longitudinal shaft of the vehicle frame, the minimum turning radius is the front and rear wheelbase. Compared with the abovementioned four-wheeled vehicle with ability to turn in tight space, the turning radius of the three-wheeled vehicle is twice as large as that of the four-wheeled vehicle that the three-wheeled vehicle requires large space for turning.

As to patents of a rhombus four-wheeled vehicle, the representative patents include US Patent No. 1,262,806, entitled "Rolling Chair", US Patent No. 3,828,876, entitled "Motor Vehicle Having Wheels in a Diamond pattern", US Patent No. 4,313,511, entitled "Land Vehicle", US patent No. 4,775,021, entitled "Automotive Vehicle Having Four Wheels in a Rhomboidal Configuration", and so on. The structure and shortcomings of the conventional rhombus four-wheel vehicles are described hereinafter in accordance with the technical means of the above patents.

Referring to FIG. 1, US Patent No. 1,262,806, entitled "Rolling Chair", is a pioneer US patent of a rhombus four-wheeled vehicle. The two side wheels 8 are coaxial without speed difference and are driven by an electric motor, whereas the front wheel 10 can be steered manually and the rear wheel 11 can roll freely. The shortcomings of the aforesaid patent are that the driving forces of the two side wheels 8 will interfere with each other while negotiating a turn that the four-wheeled vehicle fails to perform a U-turn in tight space.

Referring to FIG. 2, US Patent No. 3,828,876, entitled "Motor Vehicle Having Wheels in a Diamond Pattern" disclosed a vehicle having a front wheel ***R1*** as a steering wheel and two side wheels ***R2, R3*** employed as driving wheels, wherein the axis of the rear wheel ***R4*** is arranged to parallel to the axis of the side wheels ***R2, R3*** at all time while the rear wheel ***R4*** is maintained to roll freely without turning. The shortcomings of the aforesaid patent are that: as the axles of the rear three wheels ***R2*, *R3*, *R4*** are maintained to parallel to each other at all time while being arranged to perpendicular to the longitudinal shaft of the vehicle frame, the lateral force of the rear three wheels ***R2, R3, R4*** exerting on the ground can interfere with each other such that the vehicle fails to perform a U-turn in tight space.

Please to FIG. 3, which is a vehicle disclosed in US Patent No. 4,313,511, entitled "Land Vehicle". In the vehicle of FIG. 3, either the front wheel 19 or rear wheel 21 is employed as a steering wheel through mechanism control while disabling another for steering, and suspension systems 101, 103 of the two side wheels 24, 27 are controlled through mechanism control to incline inwardly during steering for simultaneously controlling two side wheels 24, 27 to turn with the steering wheel (i.e. the front wheel 19 or the rear wheel 21). The shortcomings of the aforesaid patent are that although the multiple-wheel control of the aforesaid patent can enhance maneuverability, it is complicated and fails to enable a vehicle to perform a U-turn in tight space.

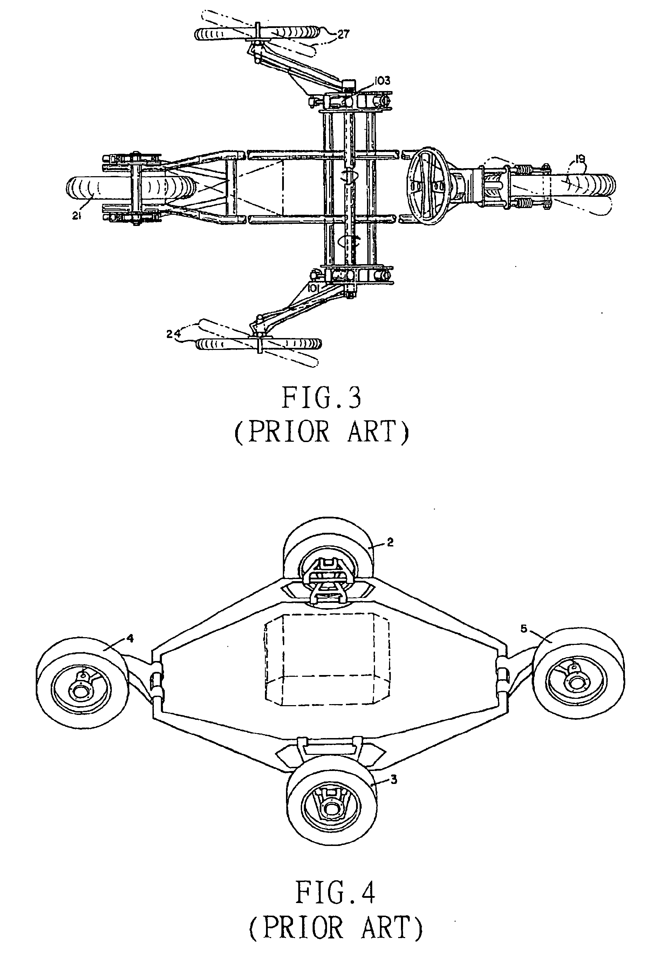

Please refer to FIG. 4, which is a vehicle disclosed in US Patent No. 4,775,021, entitled "Automotive Vehicle Having Four Wheels in a Rhomboidal Configuration". The vehicle of FIG. 4 has four independent-suspended and independent-driven wheels 2~5, wherein the front and rear wheels 4, 5 are respectively suspended by an L-shaped arm, and a steering arm is additionally configured to cooperate with a steering rod extending through the vehicle frame for enabling the front and rear wheels 4, 5 to turn simultaneously and opposite to each other, thereby controlling over-steering. The shortcomings of the aforesaid patent are that it requires precise technology to control a multi-wheeled drive system and the vehicle fails to perform a U-turn in tight space.

Further documents disclosing rhombus type vehicles are International Publication WO Patent No. 2005,021,360 and FR Patent No. 1,203,898.

WO Patent No. 2005,021,360 describes a four-wheeled vehicle, with diamond-wheel-pattern, with various arrangements for steering and driving: One is having the front wheel driving (by a hub motor, or motor-in-wheel) and steering, two side wheels rolling freely; another is having the front wheel steering (only), two side wheels motor driven through a common shaft by a single engine.
This document discloses to connect the front and rear wheels to synchronize their steering through mechanic/electric/electronic systems (e.g. crossed steel cables). Also the engine is rear-mounted and the traction is done by the front and rear wheels, or the engine is rear-mounted and the traction is on the middle wheels. All in all very complicated, without any indication of simplifying the mechanisms.

FR Patent No. 1,203,898 discloses front wheel driving and steering, with side wheels rolling freely; There is no hub motor or motor-in-wheel, and the rear wheel is steered synchronically with the front wheel.

### SUMMARY OF THE INVENTION

In view of the disadvantages of prior art, the primary object of the present invention is to provide a wheel arrangement for a vehicle having four wheels in a rhombus or diamond configuration, capable of enabling the four-wheeled vehicle to perform a turn-in-spot without wheel toe-in/toe-out control mechanism, and thereby enabling the have the four-wheeled vehicle of the invention to have the same turning radius in place as a ordinary rectangle four-wheeled vehicle with wheel toe-in/toe-out control mechanism when the length of the vehicle frames or the wheelbases of the present invention is equal to that of the conventional rectangle four-wheeled vehicle.

Another object of the present invention is to provide a wheel arrangement for enabling a four-wheeled vehicle to have good maneuverability and steering.

Yet, another object of the present invention is to provide a wheel arrangement for a four-wheeled vehicle, which enables the four-wheeled vehicle to have a streamline shape with low drag coefficient, and thus greatly reduce fuel consumption in high speed traveling, and is especially fitted to be applied by small size vehicles since the vehicles of such wheel arrangement occupy less road area and thus increase using efficiency of a road while increasing flow of vehicles traveling thereon.

To achieve the above objects, the present invention provides a wheel arrangement for a four-wheeled vehicle of the present invention, which is comprised of a front wheel, two side wheels and a rear wheel, wherein the rear wheel is connected to the frame of the vehicle by a supporting base enabling the same to be steered freely while having a ground-touching point of the same to be biased from the axis of the supporting base by a distance, and the front wheel is specified as a driving wheel, a free-rolling steering wheel or just a steering wheel with respect to actual requirement, and the two side wheels can be specified as a driving wheels or free-rolling wheels while enabling the axes of the two side wheels to be aligned to a straight line without sharing a same shaft. The wheel arrangement can be a rhombus configuration as the distances between the center of the front wheel and the centers of the two side wheels are the same as that of the center of the rear wheel and the centers of the two side wheels, or can be a diamond configuration as the distances between the center of the front wheel and the centers of the two side wheels are different from that of the center of the rear wheel and the centers of the two side wheels.

Other objects, advantages and novel features of the present invention will be drawn from the following detailed embodiment of the present invention with attached drawings, in which:

### BRIEF DESCRIPTION OF THE DRAWINGS

FIG. 1 is a schematic view of a conventional rhombus four-wheeled vehicle disclosed in US Patent No. 1,262,806.

FIG. 2 is a schematic view of a conventional rhombus four-wheeled vehicle disclosed in US Patent No. 3,828,876.

FIG. 3 is a schematic view of a conventional rhombus four-wheeled vehicle disclosed in US Patent No. 4,313,511.

FIG. 4 is a schematic view of a conventional rhombus four-wheeled vehicle disclosed in US Patent No. 4,775,021.

FIG. 5 is a perspective view of a wheel arrangement for a four-wheeled vehicle of the present invention.

FIG. 6 is a top plan view of FIG. 5.

FIG. 7 is a side elevation view of FIG. 5.

FIG. 8 shows the meeting of the axis of four wheels of a four-wheeled vehicle while it is negotiating a turn according to the present invention.

FIG. 9 shows the meeting of the axis of four wheels of a four-wheeled vehicle while it is perform a turn-in-spot according to the present invention.

FIGs. 10A is a schematic diagram illustrating a wheel arrangement of a rhombus vehicle according to the present invention.

FIG. 10B is a schematic diagram illustrating a wheel arrangement of a conventional rectangle four-wheeled vehicle.

FIG. 11A is a schematic diagram illustrating a wheel arrangement of a rhombus vehicle according to the present invention.

FIG. 11B is a schematic diagram illustrating a wheel arrangement of a conventional three-wheeled vehicle.

FIG. 12A shows a turning radius of a four-wheeled vehicle while it is perform a turn-in-spot.

FIG. 12B shows a turning radius of a conventional three-wheeled vehicle while it is perform a turn-in-spot.

### DESCRIPTION OF THE PREFERRED EMBODIMENTS

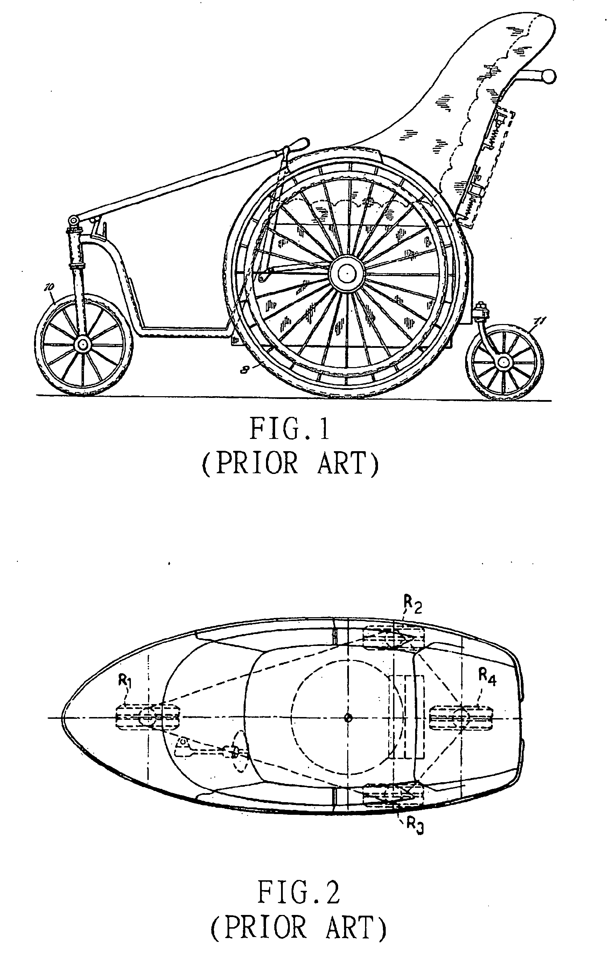

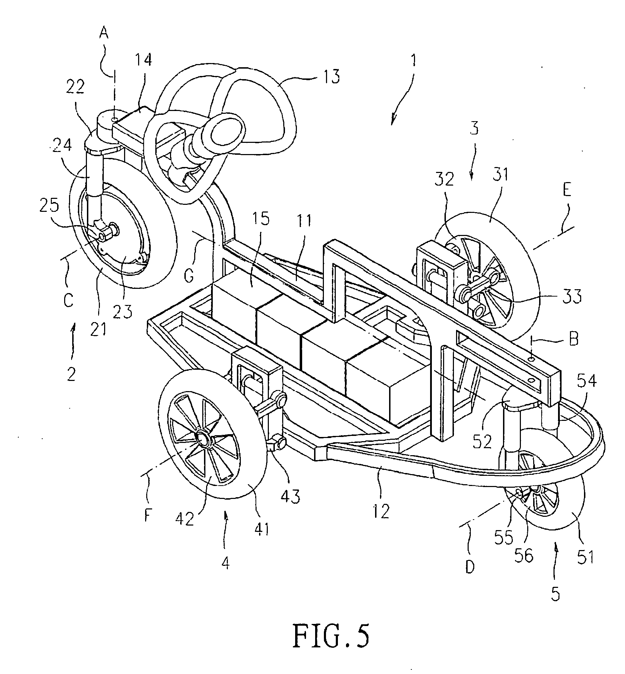

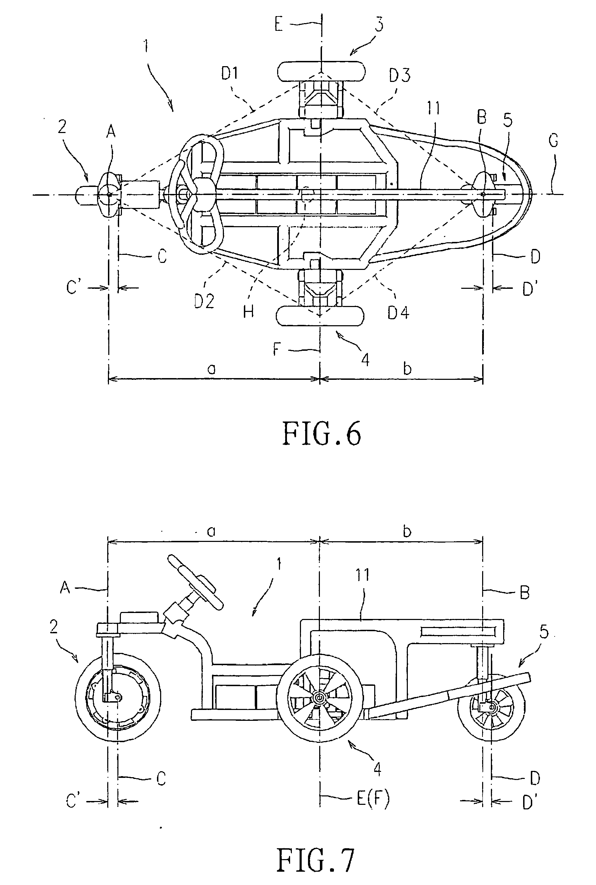

Referring to FIGs. 5-7, which are respectively a perspective view, a top plan view and a side elevation view of a wheel arrangement for a four-wheeled vehicle in accordance with a preferred embodiment of the present invention. The four-wheeled vehicle 1 includes a vehicle frame 11 and a chassis 12. Wherein, the front wheel unit 2, having a front wheel 21 and a pivoting axis ***A*,** is disposed at the front of the vehicle frame 11 by connecting the same to the front segment of the vehicle frame 11 using a supporting base 22. In addition, the vehicle frame 11 further comprises a steering device 13 (illustrated as a shape of a steering wheel, shown in FIG. 1), which is connected to the front wheel unit 2 through a switching mechanism 14. It is noted that the switching mechanism 14 can be a mechanical structure or an electronic or electrical system. A driver can control the steering device 13 to drive the front wheel unit 2 to steer around the pivoting axis ***A*** through the switching mechanism 14. The maximum steering angle of the front wheel unit 2 is no more than 90 degrees to the right or 90 degrees to the left. The front wheel unit 2 further includes a shock absorber 24 having a resilient member and a damper (not shown). The shock absorber 24 is disposed between the supporting base 22 and a shaft supporting portion 25 connecting the axis ***C*** of the front wheel 21. The point of the pivoting axis ***A*** of the front wheel unit 2 projected on the ground is biased from the point of the axis ***C*** of the front wheel 21 projected on the ground by a distance ***C'*** (as shown in FIG. 7). Therefore, the reacting force at the growid-touching point of the front wheel 21 and the moment caused by the biased distance ***C'*** enable the front wheel unit to keep progressing straightly. A hub motor 23 is disposed at the front wheel 21, which is powered by a battery pack 15 disposed on the vehicle frame 11. The driver can control the hub motor 23 to drive the four-wheeled vehicle 1 to move, which is prior art and so is not described herein. It is noted that the front wheel 21 can be driven by a motor-in-wheel instead of the hub motor 23.

Furthermore, right and left side wheel units 3, 4 are respectively disposed at opposite sides of a middle segment of the vehicle frame 11. The right side wheel unit 3 includes a right side wheel 31, a hub 32, and a suspension system 33. The right side wheel 31 can roll freely around the axis ***E*** thereof. The suspension system 33 is connected with the chassis 12 to enable the right side wheel unit 3 to be an independently suspended and freely rolling wheel unit. Similarly, the left side wheel unit 4 includes a left side wheel 41, a hub 42, and a suspension system 43. The left side wheel 41 can freely roll around the axis ***F***. The suspension system 43 is connected with the chassis 12 to enable the left side wheel unit 4 to be an independently suspended and freely rolling wheel unit. The axis ***E*** of the right side wheel unit 3 and the axis ***F*** of the left side wheel unit 4 are collinear and are perpendicular to the longitudinal axis ***G*** of the vehicle frame 11. The axis **E** and the axis **F** are not connected directly.

Secondly, a rear wheel unit 5 is disposed at the rear of the vehicle frame 11, which includes a rear wheel 51 and a pivoting axis ***B***. The rear wheel unit 5 is connected to the rear segment of the vehicle frame 11 by another supporting base 52. The rear wheel unit 5 may be steered freely within 360 degrees about the axis ***B***. The rear wheel unit 5 further includes a shock absorber 54 having a resilient member and a damper (not shown). The shock absorber 54 is disposed between the supporting base 52 and a shaft supporting portion 55 connecting the axis ***D*** of the rear wheel 51.The axis ***D*** is biased from the pivoting axis ***B*** of the rear wheel unit 5 by a distance ***D'*** (as shown in FIG. 7). The hub 56 can freely steer about the axis ***D***. When the four-wheeled vehicle 1 progresses, the force from the ground-touching point of the rear wheel 51 and the moment caused by the biased distance ***D'*** enables the rear wheel unit 5 to freely rotate about the axis ***B***. Thus, the rear wheel unit 5 can adjust itself to align to the progressing direction of the vehicle 1.

Referring to FIGs. 6 and 7, it must be illuminated that in accordance with the four-wheeled vehicle formed by the front wheel unit 2, the right side wheel unit 3, the left side wheel unit 4 and the rear wheel unit 5, the pivoting axis ***A, B*** of the front and rear wheel units 2, 5 are located on the longitudinal axis ***G*** of the vehicle frame 11, and the right and left side wheel units 3, 4 are isometrically disposed at the opposite sides of the longitudinal axis G of the vehicle frame 11. Thus, the distance ***D1, D2**,* respectively measured from the front wheel unit 2 to the right side wheel unit 3 and the left side wheel unit 4, are equal. The distance ***D3, D4**,* respectively measured from the rear wheel unit 5 to the right and left side wheel units 3, 4, are equal. When the axis ***E, F*** locate at the center of the front and rear wheel units 2, 5, the wheelbase ***a*** of the front wheel and the wheelbase ***b*** of the rear wheel are equal, and the distance ***D1**~**D4*** of the wheel units are equal thereby forming a rhombus wheel arrangement. Contrarily, when the front wheelbase ***a*** and the rear wheelbase ***b*** are not equal, a diamond wheel arrangement is formed (as shown in the dashed of FIG. 6). Furthermore, the front and rear wheelbase ***a, b*** are configured equal or unequal in accordance with the requirement of the actual driving performance of the four-wheeled vehicle and the difference of application manner. However, the CG(center of gravity position) ***H*** must be configured between the axis ***C*** of the front wheel and the axis ***E, F*** of the side wheels.

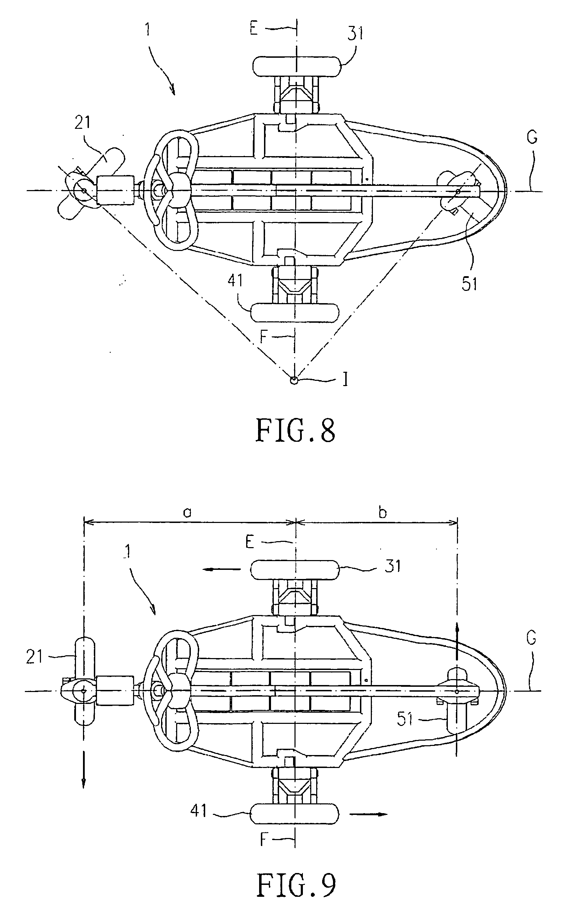

Compared with the conventional rhombus vehicle (as shown in FIGs. 1-4), since the rear wheel unit 5 of the present invention can freely steer and can forward the CG to the front wheelbase ***a***, the load of the front wheel unit 2 may be configured to be relatively larger, which fits to front wheel drive and so prevents skid of the front wheel drive wheel. Further referring to FIG. 8, when the four-wheeled vehicle of the present invention turns (illustrating status of turning left), the rolling axis ***C*, *D, E, F*** of the four wheels 21, 31, 41, 51 meet at a same turning center ***I*** thereby avoiding unstable oversteering caused by interference of side forces of the four wheels 21, 31, 41, 51 during negotiating a turn. Referring to FIG. 9, when the front wheel 21 is perform a near 90 degrees left turn which is perpendicular to the longitudinal axis ***G*** of the vehicle frame, the right side wheel 31 is rolling forward and the left side wheel 41 is rolling opposite thereto while the rear wheel 51 is free to be steer following the direction of the turn. Thus, the four-wheeled vehicle 1 can perform a turn-in-spot, i.e. a stationary turn of gyration. When the front wheelbase ***a*** is larger than the rear wheelbase ***b***, the turning radius of the stationary turn of gyration of the four-wheeled vehicle 1 is almost equal to the front wheelbase ***a**.*

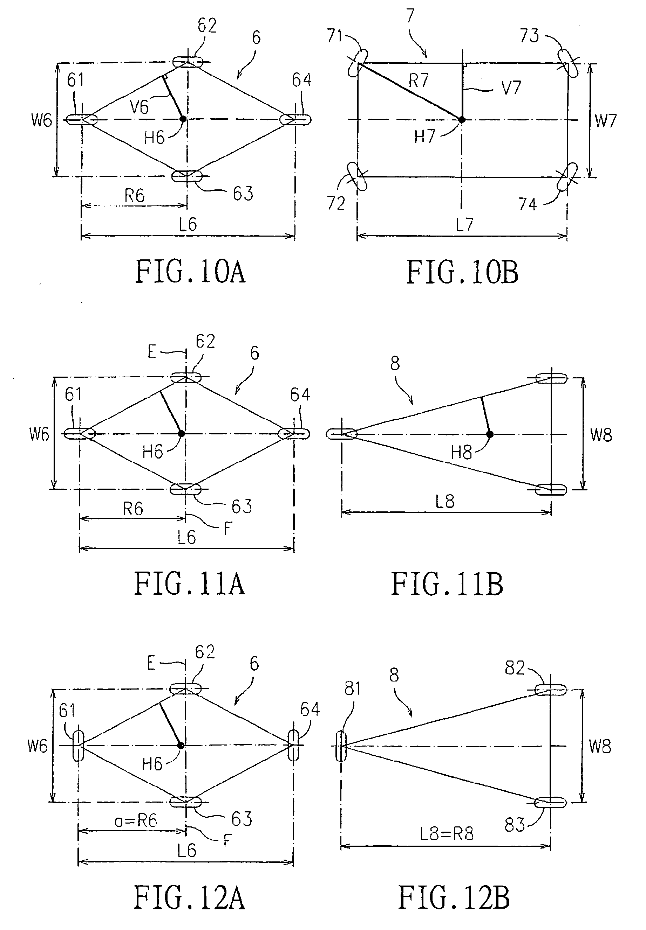

Referring to FIG. 10A showing a schematic view of a rhombus four-wheeled vehicle of the present invention, and FIG. 10B showing a schematic view of a conventional rectangle four-wheeled vehicle, the front and rear wheelbase L6 and the right and left side tread W6 of the rhombus four-wheeled vehicle 6 are equal to the front and rear wheelbase L7 and the right and left side tread W7 of the rectangle four-wheeled vehicle 7. Regarding to the static safety factor (SSF), higher SSF means stronger anti-rolling and anti-overturn capability. The value of the SSF, in rectangular vehicle, is equal to the ratio of the length W of a perpendicular line from the CG to the connection line of the front and rear wheels to height h of the CG, that is, SSF=W/h. Therefore, when the height of the CG is the same, the longer length W of the perpendicular line from the CG to the connection line of the front and rear wheels means the larger SSF. As shown in FIGs. 10A and 10B, when the height of the CG is the same, the perpendicular line V7 from the CG H7 of the rectangle four-wheeled vehicle to the connection line of the front and rear wheels is longer than the perpendicular line V6 from the CG H6 of the rhombus four-wheeled vehicle to the connection line from the front and side wheels whereby the value of SSF of the rectangle four-wheeled vehicle is larger than that of the rhombus four-wheeled vehicle. As to a small size vehicle with a narrow vehicle frame, that is treads W6, W7 of the right and left side wheels are narrow, the difference of the value of SSF of the rectangle four-wheeled vehicle and the rhombus four-wheeled vehicle is very small. As shown in FIGS. 10A and 10B, while performing a station turn of gyration, the turning radius R6 of the rhombus four-wheeled vehicle is slightly smaller than the turning radius R7 of the rectangle four-wheeled vehicle (the length from the CG to the wheel 71). When the rectangle four-wheeled vehicle 7 needs the four wheels 71~4 to simultaneously turn, the front wheels 71, 72 must turn to be toe-in, and the rear wheels 73, 74 must turn to be toe-out, which requires extremely complicated mechanism and control and even adversely affects the wheel position. When the rhombus four-wheeled vehicle 6 of the present invention is performing a station turn of gyration, only the steering of the front wheel 61 is under control, the other three wheels 62~64 can roll freely, and the rear wheel can self-steer (simultaneously referring to FIG. 9) whereby it does not need an additional mechanism and driving force for controlling. Accordingly, as to the function of station turn of gyration, the rhombus four-wheeled vehicle of the present invention is advantageous.

Referring to FIG. 11A showing a schematic view of a rhombus four-wheeled vehicle, and FIG. 11B showing a schematic view of a conventional three-wheeled vehicle, the front and rear wheelbase L6 and the right and left side tread W6 of the rhombus four-wheeled vehicle 6 are equal to the front and rear wheelbase L8 and the right and left side tread W8 of the three-wheeled vehicle 8. To consider drivability and prevent from backwards inclining during accelerating, the CG H8 of the three-wheeled vehicle 8 must be moved forwards. Since the rhombus four-wheeled vehicle 6 has the rear wheel 64, the CG H6 of the rhombus four-wheeled vehicle can be configured to extremely close the axis ***E, F*** of the two side wheels 62, 63. Thus, when the heights of the CGs are equal, the value of the SSF of the rhombus four-wheeled vehicle 6 is greater than that of the three-wheeled vehicle whereby the rhombus four-wheeled vehicle has more anti-rolling capability.

Referring to FIGs. 12A and 12B, as shown in FIG. 12A (simultaneously referring to FIG. 9) the front and rear wheelbase L6 and the right and left side tread W6 of the rhombus four-wheeled vehicle 6 are equal to the front and rear wheelbase L8 and the right and left side tread W8 of the three-wheeled vehicle 8. When the front wheel 61 of the rhombus four-wheeled vehicle 6 of the present invention is turned 90 degrees and the rear wheel 64 reversely turns 90 degrees for performing a station turn of gyration, the turning radius R6 of the vehicle 6 is the front wheelbase a. When the three-wheeled vehicle 8 is performing a station turn of gyration as the front wheel turns 90 degrees, the turning radius R8 is the wheelbase L8 of the front and rear wheels as the front wheel 81 is the driving wheel and the rear wheels can freely roll. Comparatively, since the front and rear wheelbase L6 of the rhombus four-wheeled vehicle 6 is equal to the front and rear wheelbase L8 of the three-wheeled vehicle 8, the turning radius R6 of the rhombus four-wheeled vehicle 6 is half of the turning radius R8 of the three-wheeled vehicle 8 thereby greatly reducing space for turning.

Further referring to FIG. 5, in the preferred embodiment, the front wheel unit 2 has the driving force, and the steering operation device 13 is operated to steer the front wheel unit 2 through the switching mechanism 14. The right and left side wheel units 3, 4 and the rear wheel unit 5 can freely roll. It must be noted that besides the above arrangement, the front wheel unit 2 may be configured to steer only, the right and left wheel units 3, 4 are configured as driving wheels, and the rear wheel unit 5 is configured to steer freely, or the front wheel unit 2, the right and left side wheel units 3, 4 are configured as driving wheels, the front wheel unit 2 is still configured to steer and the rear wheel unit 5 is configured to steer freely, or the front and rear wheel units 2, 5 are configured to steer freely, the right and left side wheel units 3, 4 are configured as driving wheels, but the wheel units 3, 4 can individually control power output, rolling direction and speed. The power transmission, speed and direction of rotation of the foregoing driving wheel can be controlled through a driving control unit or mechanism (not shown, belonging to prior art and so not described herein). When the driver controls steering operation device 13, the driver intent can be transmitted to the control unit through the switching mechanism 14. When the front wheel unit 2 turns approximately 90 degrees, the driving control mechanism of the right and left side wheel units 3, 4 can be actuated to enable one of the right and left side wheel units 3, 4 to forwards roll and the other to rearwards roll whereby the four-wheeled vehicle can fix a position to turn in place. The power and rotation speed of the right and left side wheel units 3, 4 decide the vehicle to straightly progress, steer or performing a stationary turn of gyration. When the front and rear wheel units 2, 5 both can steer freely, the front wheel can naturally turn to the progressing direction during swerving or performing a stationary turn of gyration without additional driving mechanism.

As described above, the wheel arrangement for a four-wheel vehicle of the present invention has a rhombus or diamond configuration and can have the same radius of turning in place as a rectangle four-wheeled vehicle having switching mechanism for turning in place without additional steering control mechanism when the length of the vehicle frames or the wheelbases of the present invention and the conventional four-wheeled vehicle are equal. Compared with a three-wheeled vehicle, the wheel arrangement for a four-wheel vehicle of the present invention has more advantages. The wheel arrangement for a four-wheel vehicle of the present invention upgrades drivability and motility. The streamline shaped four-wheeled vehicle of the invention has a low wind resistance coefficient which greatly reduces fuel consumption during high speed traveling. The wheel arrangement for a four-wheel vehicle of the present invention is especially fitted to be applied by small size vehicles since the vehicles of such wheel arrangement occupy less road area and thus increase using efficiency of a road while increasing flow of vehicles traveling thereon.

## Claims

1. A wheel arrangement for a four-wheeled vehicle, comprising:
a front wheel, having abilities of driving and steering, wherein the driving ability of the front wheel is enabled by a hub motor or a motor-in-wheel;
two side wheels, capable of rolling freely and individually while enabling the axis of the two side wheels to be aligned to a straight line without sharing a same shaft; and
a rear wheel, capable of being turned and steered freely while being connected to a vehicle frame of the four-wheeled vehicle by a supporting base.

2. The wheel arrangement of claim 1, wherein the steering of the front wheel is enabled by manpower.

3. The wheel arrangement of claim 1, wherein the steering angle of the front wheel toward one side is less than 90 degrees.

4. The wheel arrangement of claim 1, wherein the rear wheel is rotatable within 360 degrees about the axis of the supporting base.

5. The wheel arrangement of claim 1, wherein the four wheels is arranged in a rhombus configuration while the distances measured from the centers of the two side wheels to the center of the front wheel, and those to the center of the rear wheel are all equal.

6. The wheel arrangement of claim 1, wherein the four wheels is arranged in a diamond configuration while the distances measured from the centers of the two side wheels to the center of the front wheel are not equal to the distances measured from the center of the rear wheel to the centers of the two side wheels.

7. The wheel arrangement of claim 1, wherein the front wheel is connected with a switching mechanism and a steering device for steering control.

8. The wheel arrangement of claim 1, wherein the point of the pivoting axis of the front wheel projected on the ground is biased from the point of the center of the front wheel projected on the ground by a distance.

9. The wheel arrangement of claim 1, wherein the two side wheels are respectively connected to the vehicle frame by a hub and a suspension system.

10. A wheel arrangement for a four-wheeled vehicle comprising:
a front wheel, having steering ability;
two side wheels, capable of respectively issuing a driving force for driving the four-wheeled vehicle while enabling the axis of the two side wheels to be aligned to a straight line without sharing a same shaft, each side wheel having power output, wherein the driving forces of the two side wheels are respectively enabled by a motor; and
a rear wheel, capable of being turned and steered freely while being connected to a vehicle frame of the four-wheeled vehicle by a supporting base.

11. The wheel arrangement of claim 10, wherein the front wheel is driven by a hub motor or a motor-in-wheel.

12. The wheel arrangement of claim 10, wherein the steering of the front wheel is enabled by manpower.

13. The wheel arrangement of claim 10, wherein the steering angle of the front wheel toward one side is less than 90 degrees.

14. The wheel arrangement of claim 10, wherein the front wheel is enabled to be turned and steered freely while the each of the two side wheels is enabled to control individually its power output, rotation direction and rotation speed.

15. The wheel arrangement of claim 14, wherein the front wheel is connected to the vehicle frame by a supporting base.

16. The wheel arrangement of claim 15, wherein the ground-touching point of the front wheel is any one point of a circle surrounding the point of the axis of the supporting base projected on the ground.

17. The wheel arrangement of claim 10, wherein the motor has a controller for controlling the rotation speeds and rolling directions of the two side wheels in accordance with a steering angle of the front wheel.

18. The wheel arrangement of claim 10, wherein the two side wheels are enabled to rotate independently and toward different directions.

19. The wheel arrangement of claim 10, wherein the four wheels is arranged in a rhombus configuration while the distances measured from the centers of the two side wheels to the center of the front wheel, and those to the center of the rear wheel are all equal.

20. The wheel arrangement of claim 10, wherein the four wheels is arranged in a diamond configuration while the distances measured from the centers of the two side wheels to the center of the front wheel are not equal to the distances measured from the center of the rear wheel to the centers of the two side wheels.

21. The wheel arrangement of claim 10, wherein the ground-touching point of the rear wheel is any one point of a circle surrounding the point of the axis of the supporting base projected on the ground.

22. The wheel arrangement of claim 10, wherein the front wheel is connected with a switching mechanism and a steering device for steering control.

23. The wheel arrangement of claim 10, wherein the point of the pivoting axis of the front wheel projected on the ground is biased from the point of the center of the front wheel projected on the ground by a distance.

24. The wheel arrangement of claim 10, wherein the two side wheels are respectively connected to the vehicle frame by a hub and a suspension system.

25. The wheel arrangement of claim 10, wherein the front wheel is enabled to issue a driving force similar to that of each side wheel.

## Patentansprüche

1. Räderanordnung für ein vierrädriges Fahrzeug mit:
einem Vorderrad, das dazu in der Lage ist, zu fahren und zu lenken, wobei die Fähigkeit des Vorderrades zu fahren durch einen Radnabenmotor oder einen Motor im Rad ermöglicht wird;
zwei Seitenrädern, die in der Lage ist sind, frei und individuell zu rollen, während die Achsen der beiden Seitenräder dazu ausgerichtet sind, geradlinig zu fluchten, olme sich eine gleiche Achse zu teilen; und
einem Hinterrad, das in der Lage ist, unabhängig geschwenkt und gelenkt zu werden, während es durch einen Stützfuß mit einem Fahrzeugrahmen eines vierrädrigen Fahrzeuges verbunden ist.

2. Räderanordnung nach Anspruch 1, wobei das Lenken des Vorderrades durch Menschenkraft ermöglicht ist.

3. Räderanordnung nach Anspruch 1, wobei der Lenkwinkel des Vorderrades zu einer Seite hin weniger als 90 Grad beträgt.

4. Räderanordnung nach Anspruch 1, wobei das Hinterrad innerhalb 360 Grad um die Achse des Stützfußes drehbar ist.

5. Räderanordnung nach Anspruch 1, wobei die vier Räder rautenförmig angeordnet sind, während die Abstände von den Mittelpunkten der beiden Seitenräder zum Mittelpunkt des Vorderrades gemessen und jene zum Mittelpunkt des Hinterrades gemessen, übereinstimmen.

6. Räderanordnung nach Anspruch 1, wobei die vier Räder in Diamantkonfiguration angeordnet sind, während die Abstände, von den Mittelpunkten der beiden Seitenräder zum Mittelpunkt des Vorderrades gemessen, nicht mit den Abständen vom Mittelpunkt des Hinterrades zu den Mittelpunkten der beiden Seitenräder gemessen, übereinstimmen.

7. Räderanordnung nach Anspruch 1, wobei das Vorderrad mit einem Schaltmechanismus und einer Lenkvorrichtung zur Lenksteuerung verbunden ist.

8. Räderanordnung nach Anspruch 1, wobei zwischen dem Punkt der Drehachse des Vorderrades, projiziert auf den Boden, und dem Punkt des Mittelpunktes des Vorderrades, projiziert auf den Boden, ein Abstand besteht.

9. Räderanordnung nach Anspruch 1, wobei die beiden Seitenräder jeweils durch eine Radnabe und einen Aufhängemechanismus mit dem Fahrzeugrahmen verbunden sind.

10. Räderanordnung für ein vierrädriges Fahrzeug mit:
einem Vorderrad, das lenkfähig ist;
zwei Seitenrädern, die in der Lage sind, eine dementsprechende Antriebskraft zum Antrieb des vierrädrigen Fahrzeuges aufzubringen, während die Achsen der beiden Seitenräder dazu ausgerichtet sind, geradlinig zu fluchten, ohne sich eine gleiche Achse zu teilen,
wobei jedes Seitenrad Antriebskraft ausstößt, wobei die Antriebskräfte der beiden Seitenräder jeweils durch einen Motor erzeugt werden;
und
einem Hinterrad, das in der Lage ist, unabhängig geschwenkt und gelenkt zu werden und durch einen Stützfuß mit einem Fahrzeugrahmen eines vierrädrigen Fahrzeuges verbunden ist.

11. Räderanordnung nach Anspruch 10, wobei das Vorderrad durch einen Radnabenmotor oder einen Motor im Rad angetrieben wird.

12. Räderanordnung nach Anspruch 10, wobei das Lenken des Vorderrades durch Menschenkraft ermöglicht ist.

13. Räderanordnung nach Anspruch 10, wobei der Lenkwinkel des Vorderrades zu einer Seite hin weniger als 90 Grad beträgt.

14. Räderanordnung nach Anspruch 10, wobei das Vorderrad in der Lage ist, unabhängig geschwenkt und gelenkt zu werden, während jedes der beiden Seitenräder in der Lage ist, seine Antriebskraft, seine Drehrichtung und seine Drehgeschwindigkeit individuell zu kontrollieren.

15. Räderanordnung nach Anspruch 14, wobei das Vorderrad durch einen Stützfuß mit dem Fahrzeugrahmen verbunden ist.

16. Räderanordnung nach Anspruch 15, wobei der Bodenberührungspunkt des Vorderrades irgendein Punkt eines Kreises ist, der den auf den Boden projizierten Punkt der Stützfußachse umgibt.

17. Räderanordnung nach Anspruch 10, wobei der Motor eine Kontrolleinheit zum Kontrollieren der Drehgeschwindigkeiten und Rollrichtungen der beiden Seitenräder in Übereinstimmung mit einem Lenkwinkel des Vorderrades besitzt.

18. Räderanordnung nach Anspruch 10, wobei die beiden Seitenräder in der Lage sind, sich unabhängig und in verschiedene Richtungen zu drehen.

19. Räderanordnung nach Anspruch 10, wobei die vier Räder rautenförmig angeordnet sind, während die Abstände von den Mittelpunkten der beiden Seitenräder zum Mittelpunkt des Vorderrades gemessen und jene zum Mittelpunkt des Hinterrades gemessen, übereinstimmen.

20. Räderanordnung nach Anspruch 10, wobei die vier Räder in Diamantkonfiguration angeordnet sind, während die Abstände, von den Mittelpunkten der beiden Seitenräder zum Mittelpunkt des Vorderrades gemessen, nicht mit den Abständen vom Mittelpunkt des Hinterrades zu den Mittelpunkten der beiden Seitenräder gemessen, übereinstimmen.

21. Räderanordnung nach Anspruch 10, wobei der Bodenberührungspunkt des Hinterrades irgendein Punkt eines Kreises ist, der den auf den Boden projizierten Punkt der Stützfußachse umgibt.

22. Räderanordnung nach Anspruch 10, wobei das Vorderrad mit einem Schaltmechanismus und einer Lenkvorrichtung zur Lenksteuerung verbunden ist.

23. Räderanordnung nach Anspruch 10, wobei zwischen dem Punkt der Drehachse des Vorderrades, projiziert auf den Boden, und dem Punkt des Mittelpunktes des Vorderrades, projiziert auf den Boden, ein Abstand besteht.

24. Räderanordnung nach Anspruch 10, wobei die beiden Seitenräder jeweils durch eine Radnabe und einen Aufhängemechanismus mit dem Fahrzeugrahmen verbunden sind.

25. Räderanordnung nach Anspruch 10, wobei das Vorderrad in der Lage ist, eine Antriebskraft aufzubringen, die der eines jeden Seitenrades ähnelt.

## Revendications

1. Agencement de roues pour un véhicule à quatre roues, comprenant :
une roue avant ayant des capacités pour entraîner et diriger, dans lequel la capacité d'entraînement de la roue avant est permise par un moteur de moyeu ou un moteur roue ;
deux roues latérales, pouvant rouler librement et individuellement tout en permettant à l'axe des deux roues latérales d'être aligné sur une ligne droite sans partager un même arbre ; et
une roue arrière pouvant tourner et être dirigée librement tout en étant raccordée à un châssis de véhicule du véhicule à quatre roues par une base de support.

2. Agencement de roues selon la revendication 1, dans lequel la direction de la roue avant est permise par la puissance humaine.

3. Agencement de roues selon la revendication 1, dans lequel l'angle de braquage de la roue avant vers un côté est inférieur à 90 degrés.

4. Agencement de roues selon la revendication 1, dans lequel la roue arrière peut tourner à 360 degrés autour de l'axe de la base de support.

5. Agencement de roues selon la revendication 1, dans lequel les quatre roues sont agencées selon une configuration de losange alors que les distances mesurées des centres des deux roues latérales jusqu'au centre de la roue avant et celles jusqu'au centre de la roue arrière sont toutes identiques.

6. Agencement de roues selon la revendication 1, dans lequel les quatre roues sont agencées selon une configuration de diamant alors que les distances mesurées des centres des deux roues latérales jusqu'au centre de la roue avant ne sont pas égales aux distances mesurées du centre de la roue arrière jusqu'aux centres des deux roues latérales.

7. Agencement de roues selon la revendication 1, dans lequel la roue avant est raccordée avec un mécanisme de commutation et un dispositif de direction pour la commande de direction.

8. Agencement de roues selon la revendication 1, dans lequel le point de l'axe de pivot de la roue avant en saillie sur le sol est sollicité à partir du point du centre de la roue avant en saillie sur le sol selon une distance.

9. Agencement de roues selon la revendication 1, dans lequel les deux roues latérales sont respectivement raccordées au châssis de véhicule par un moyeu et un système de suspension.

10. Agencement de roues pour un véhicule à quatre roues, comprenant :
une roue avant ayant une capacité de direction ;
deux roues latérales, pouvant produire respectivement une force d'entraînement pour entraîner le véhicule à quatre roues tout en permettant à l'axe des deux roues latérales d'être aligné sur une ligne droite sans partager un même arbre, chaque roue latérale ayant une sortie de puissance, dans lequel les forces d'entraînement des deux roues latérales sont respectivement permises par un moteur ; et
une roue arrière, capable de tourner et d'être dirigée librement sans être raccordée à un châssis de véhicule du véhicule à quatre roues par une base de support.

11. Agencement de roues selon la revendication 10, dans lequel la roue avant est entraînée par un moteur de moyeu et un moteur roue.

12. Agencement de roues selon la revendication 10, dans lequel la direction de la roue avant est permise par la puissance humaine.

13. Agencement de roues selon la revendication 10, dans lequel l'angle de braquage de la roue avant vers un côté est inférieur à 90 degrés.

14. Agencement de roues selon la revendication 10, dans lequel la roue avant est autorisée à tourner et à être dirigée librement alors que chacune des deux roues latérales peut commander individuellement sa sortie de puissance, sa direction de rotation et sa vitesse de rotation.

15. Agencement de roues selon la revendication 14, dans lequel la roue avant est raccordée au châssis de véhicule par une base de support.

16. Agencement de roues selon la revendication 15, dans lequel le point de contact avec le sol de la roue avant est l'un quelconque des points d'un cercle entourant le point de l'axe de la base de support en saillie sur le sol.

17. Agencement de roues selon la revendication 10, dans lequel le moteur a un contrôleur pour contrôler les vitesses de rotation et les directions de roulage des deux roues latérales selon un angle de braquage de la roue avant.

18. Agencement de roues selon la revendication 10, dans lequel les deux roues latérales peuvent tourner indépendamment et vers des directions différentes.

19. Agencement de roues selon la revendication 10, dans lequel les quatre roues sont agencées selon une configuration de losange alors que les distances mesurées des centres des deux roues latérales jusqu'au centre de la roue avant, et celles jusqu'au centre de la roue arrière sont toutes identiques.

20. Agencement de roues selon la revendication 10, dans lequel les quatre roues sont agencées selon une configuration en diamant, alors que les distances mesurées des centres des deux roues latérales jusqu'au centre de la roue avant ne sont pas égales aux distances mesurées du centre de la roue arrière jusqu'aux centres des deux roues latérales.

21. Agencement de roues selon la revendication 10, dans lequel le point de contact avec le sol de la roue arrière est l'un quelconque des points d'un cercle entourant le point de l'axe de la base de support en saillie sur le sol.

22. Agencement de roues selon la revendication 10, dans lequel la roue avant est raccordée avec un mécanisme de commutation et un dispositif de direction pour la commande de direction.

23. Agencement de roues selon la revendication 10, dans lequel le point de l'axe de pivot de la roue avant en saillie sur le sol est sollicité à partir du point du centre de la roue avant en saillie sur le sol selon une distance.

24. Agencement de roues selon la revendication 10, dans lequel les deux roues latérales sont respectivement raccordées au châssis de véhicule par un moyeu et un système de suspension.

25. Agencement de roues selon la revendication 10, dans lequel la roue avant peut produire une force d'entraînement similaire à celle de chaque roue latérale.
